# EUROPÄISCHE PATENTANMELDUNG

(11) **EP 4 841 371 A1**
(43) Veröffentlichungstag der Anmeldung: **18.11.2026**
(21) Anmeldenummer: 25177033.5
(22) Anmeldetag: 16.05.2025
(51) Int. Cl.: G05B 19/042

(54) **LANDWIRTSCHAFTLICHE MASCHINE UND VERFAHREN ZUM BETREIBEN EINER ANORDNUNG VON AKTOREN EINER LANDWIRTSCHAFTLICHEN MASCHINE**

(71) Anmelder: Kverneland Group Soest GmbH, 59494 Soest (DE)
(72) Erfinder: Harte, Christian, 59494 Soest (DE); Westermann, Henning, 59494 Soest (DE)
(74) Vertreter: Bittner, Thomas L.

(57) **Zusammenfassung**

Die Erfindung betrifft eine landwirtschaftliche Maschine sowie ein Verfahren zum Betreiben einer Anordnung von Aktoren (3) einer landwirtschaftlichen Maschine, welche Folgendes aufweist: die Anordnung von Aktoren (3), die zwischen einem ersten und einem zweiten Betriebszustand umschaltbar sind; eine elektronischen Steuereinheit (1), die betreibbar ist, den Aktoren (3.1, ..., 3.n) der Anordnung von Aktoren (3) jeweils zugeordnete Steuersignale zum Umschalten zwischen dem ersten und dem zweiten Betriebszustand zu erzeugen; einem ersten Datenbus (2), der mit der elektronischen Steuereinheit (1) und einem ersten Aktor (3.1) verbunden sind, derart, dass die den Aktoren (3.1, ..., 3.n) jeweils zugeordneten Steuersignale von der elektronischen Steuereinheit (1) über den ersten Datenbus (2) an den ersten Aktor (3.1) übertragbar sind, wobei alle weiteren Aktoren (3.2, ..., 3.n) der Anordnung von Aktoren (3) frei von einer Datenkommunikationsverbindung mit dem ersten Datenbus (2) gebildet sind; und einen zweiten Datenbus (5), der getrennt von dem ersten Datenbus (2) gebildet ist und mit dem ersten Aktor (3.1) sowie allen weiteren Aktoren (3.2, ..., 3.n) verbunden ist, derart, dass den weiteren Aktoren (3.2, ..., 3.n) zugeordnete Steuersignale von dem ersten Aktor (3.1) an einen oder alle weiteren Aktoren (3.2, ..., 3.n) über den zweiten Datenbus (5) übertragbar sind, wobei die elektronische Steuereinheit (1) frei von einer Datenkommunikationsverbindung mit dem zweiten Datenbus (5) gebildet ist.

## Beschreibung

Die Erfindung betrifft eine landwirtschaftliche Maschine sowie ein Verfahren zum Betreiben einer Anordnung von Aktoren einer landwirtschaftlichen Maschine.

### Hintergrund

Landwirtschaftliche Maschinen weisen regelmäßig ein oder mehrere Aktoren auf. Als Aktor werden üblicherweise antriebstechnische Baueinheiten bezeichnet, die ein Signal oder Steuersignal in mechanische Bewegung, Kraft, Druck oder Drehmoment umsetzen. Zu Aktoren, die bei landwirtschaftlichen Maschinen zum Einsatz kommen, zählen zum Beispiel Elektromotoren, Hydraulik- oder Pneumatik-Aktoren oder auch pneumatische, hydraulische oder elektrische Zylinder.

Bei landwirtschaftlichen Maschinen dienen die Aktoren beispielsweise zum Verlagern von Arbeitswerkzeugen der landwirtschaftlichen Maschine oder auch zum Öffnen und zum Schließen von Ventilen. Zum Beispiel werden Aktoren in Form von Elektromotoren bei Sämaschinen verwendet, um mit Hilfe der Elektromotoren Klappen oder Ventile für Leitungen zu öffnen und zu schließen, in denen das auszubringende Saatgut transportiert wird, insbesondere mittels pneumatischer Unterstützung. So sind bei solchen Sämaschinen Verteilerköpfe bekannt, bei denen Elektromotoren Klappen oder Ventile in Zuführleitungen für einzelne Säreihen der Sämaschine steuern, derart, dass mittels Umschalten der Elektromotoren zwischen verschiedenen Betriebszuständen die Zuleitungen zu den Säreihen geöffnet oder geschlossen werden können.

Da landwirtschaftliche Maschinen zunehmend mehr Aktoren aufweisen, besteht Bedarf, den Betrieb der Aktoren möglichst effizient zu steuern.

### Zusammenfassung

Aufgabe der Erfindung ist es, eine landwirtschaftliche Maschine sowie ein Verfahren zum Betreiben einer Anordnung von Aktoren einer landwirtschaftlichen Maschine anzugeben, bei denen die Aktoren im Betrieb der landwirtschaftlichen Maschine effizient und zuverlässig gesteuert werden können.

Zur Lösung sind eine landwirtschaftliche Maschine sowie ein Verfahren zum Betreiben einer Anordnung von Aktoren einer landwirtschaftlichen Maschine nach den unabhängigen Ansprüchen 1 und 14 geschaffen. Ausgestaltungen sind Gegenstand von abhängigen Unteransprüchen.

Nach einem Aspekt ist eine landwirtschaftliche Maschine geschaffen, die eine Anordnung von Aktoren, die jeweils zwischen einem ersten und einem zweiten Betriebszustand umschaltbar sind, sowie eine elektrische Steuereinheit aufweist, die betreibbar ist, den Aktoren der Anordnung von Aktoren jeweils zugeordnete Steuersignale zum Umschalten zwischen dem ersten und dem zweiten Betriebszustand zu erzeugen. Die landwirtschaftliche Maschine weist einen ersten Steuerbus auf, wobei die elektronische Steuereinheit und ein erster Aktor der Anordnung von Aktoren mit dem ersten Datenbus verbunden sind, derart, dass die den Aktoren jeweils zugeordneten Steuersignale von der elektronischen Steuereinheit über den ersten Datenbus an den ersten Aktor übertragbar sind. Dem ersten Aktor ist eine Adresse auf dem ersten Datenbus zugeordnet, derart, dass die den Aktoren jeweils zugeordneten Steuersignale von der elektronischen Steuereinheit zum Übermitteln an den ersten Aktor an die Adresse auf dem ersten Datenbus adressierbar sind. Alle weiteren Aktoren der Anordnung von Aktoren sind frei von einer Datenkommunikationsverbindung mit dem ersten Datenbus. Die landwirtschaftliche Maschine weist weiterhin einen zweiten Datenbus auf, wobei der zweite Datenbus getrennt von dem ersten Datenbus gebildet ist. Der erste Aktor sowie alle weiteren Aktoren der Anordnung von Aktoren sind mit dem zweiten Datenbus verbunden, derart, dass den weiteren Aktoren zugeordnete Steuersignale von dem ersten Aktor an einen oder alle weiteren Aktoren über den zweiten Datenbus übertragbar sind. Die elektronische Steuereinheit ist frei von einer Datenkommunikationsverbindung mit dem zweiten Datenbus gebildet.

Nach einem weiteren Aspekt ist ein Verfahren zum Betreiben einer Anordnung von Aktoren einer landwirtschaftlichen Maschine geschaffen, wobei das Verfahren Folgendes aufweist: Bereitstellen einer landwirtschaftlichen Maschine mit einer Anordnung von Aktoren, die jeweils zwischen einem ersten und einem zweiten Betriebszustand umschaltbar sind, und einer elektronischen Steuereinheit, die betreibbar ist, den Aktoren jeweils zugeordnete Steuersignale zum Umschalten zwischen dem ersten und dem zweiten Betriebszustand zu erzeugen. Es wird ein erster Datenbus ausgebildet. Die elektronische Steuereinheit und ein erster Aktor der Anordnung von Aktoren werden mit dem ersten Datenbus verbunden, derart, dass die den Aktoren jeweils zugeordneten Steuersignale von der elektronischen Steuereinheit über den ersten Datenbus an den ersten Aktor übertragen werden. Dem ersten Aktor wird eine Adresse auf dem ersten Datenbus zugeordnet, derart, dass die den Aktoren jeweils zugeordneten Steuersignale von der elektronischen Steuereinheit zum Übermitteln an den ersten Aktor an die Adresse auf dem ersten Datenbus adressiert werden. Alle weiteren Aktoren der Anordnung von Aktoren werden frei von einer Datenkommunikationsverbindung mit dem ersten Datenbus gebildet. Es ist ein zweiter Datenbus ausgebildet. Der zweite Datenbus wird getrennt von dem ersten Datenbus gebildet. Der erste Aktor sowie alle weiteren Aktoren der Anordnung von Aktoren werden mit dem zweiten Datenbus verbunden, derart, dass den weiteren Aktoren zugeordneten Steuersignale von dem ersten Aktor an einen oder alle weiteren Aktoren über den zweiten Datenbus übertragen werden. Die elektronische Steuereinheit wird frei von einer Datenkommunikationsverbindung mit dem zweiten Datenbus gebildet.

Bei der landwirtschaftlichen Maschine ist der erste Datenbus vorgesehen, welcher, insbesondere in Bezug auf die Anordnung von Aktoren, auch als externer Datenbus bezeichnet werden kann. Der erste Datenbus ermöglicht es, Datensignale, insbesondere Steuersignale, von der elektronischen Steuereinheit, die ihrerseits zum Beispiel auf einem landwirtschaftlichen Anhängefahrzeug oder einem Schlepper der landwirtschaftlichen Maschine angeordnet sein kann, an den ersten Aktor der Anordnung von Aktoren zu übermitteln. Die den ersten Aktor nicht umfassenden weiteren oder verbleibenden Aktoren der Anordnung von Aktoren sind getrennt von dem ersten Datenbus ausgeführt. Die landwirtschaftliche Maschine ist mit einem zweiten Datenbus gebildet, welcher, insbesondere in Bezug auf die Anordnung von Aktoren, auch als interner Datenbus bezeichnet werden kann und der getrennt von dem ersten Datenbus gebildet ist. Mit dem zweiten Datenbus sind alle Aktoren der Anordnung von Aktoren verbunden, wohingegen für die elektronische Steuereinheit keine Datenkommunikationsverbindung mit dem zweiten Datenbus besteht. Die elektronische Steuereinheit ist somit nicht in der Lage, selbst Steuersignale direkt auf den zweiten Datenbus zu geben oder von diesem direkt zu empfangen.

In Verbindung mit dem jeweiligen Umschalten der Aktoren zwischen dem ersten und dem zweiten Betriebszustand kann ein Umschalten zwischen einer kontinuierlichen Abfolge von Betriebszuständen vorgesehen sein.

Die vorgesehene Ausbildung der landwirtschaftlichen Maschine ermöglicht es, der Anordnung von Aktoren nur eine einzige Busadresse auf dem ersten Datenbus zuzuordnen, trotzdem aber Steuersignale, die die elektronische Steuereinheit erzeugt und die einem oder mehreren Aktoren aus der Anordnung von Aktoren zugeordnet sind, an diesen Aktor oder die Aktoren zu übermitteln. Hierzu nimmt der erste Aktor der Anordnung von Aktoren eine Art Brückenfunktion ein, derart, dass die von der elektronischen Steuereinheit über den ersten Datenbus übermittelten Steuersignale für die von dem ersten Aktor verschiedenen weiteren Aktoren der Anordnung von Aktoren von dem ersten Aktor empfangen und dann von diesem über den zweiten Datenbus an den oder die weiteren Aktoren der Anordnung von Aktoren weitergegeben werden.

Auf diese Weise können zum Beispiel mehrere Anordnungen von Aktoren über einen jeweiligen ersten Aktor an den ersten Datenbus angeschlossen werden, wobei jeder Anordnung von Aktoren auf dem ersten Datenbus nur eine einzige (Bus-)Adresse zugeordnet ist. So können die zur Verfügung stehenden Busanschlussstellen des ersten Datenbusses effizient genutzt werden, um möglichst viele Funktionskomponenten anzuschließen. Trotzdem ist es ermöglicht, dass die elektronische Steuereinheit für jeden Aktor aus der oder den Anordnungen von Aktoren Steuersignale erzeugt und diese an den jeweiligen Aktor sicher übermittelt.

Alle Aktoren der Anordnung von Aktoren erhalten eine eindeutige Adresse am zweiten Datenbus. Die eindeutige Zuordnung der Aktoren zu den Adressen erfolgt, da in der Einschaltphase ein Aktor nach dem anderen dem zweiten Datenbus hinzugefügt wird. So ist eine Adressierung entsprechend der physikalischen Anschlussreihenfolge ermöglicht.

Den Aktoren kann jeweils eine Adresse auf dem zweiten Datenbus zugeordnet sein, derart, dass die den weiteren Aktoren jeweils zugeordneten Steuersignale von dem ersten Aktor zum Übermitteln an den jeweiligen weiteren Aktor an dessen Adresse auf dem zweiten Datenbus adressierbar sind. Die jeweilige Zuordnung einer individuellen Adresse auf dem zweiten Datenbus zu allen Aktoren der Anordnung von Aktoren ermöglicht es zum Beispiel, die den jeweiligen weiteren Aktoren zugeordneten Steuersignale, also Steuersignale, die einer Steuerung des jeweiligen Betriebszustands des weiteren Aktors dienen, an den weiteren Aktor zu adressieren und über den zweiten Datenbus sicher zu übermitteln. Hierbei übernimmt der erste Aktor der Anordnung von Aktoren die Funktion, Steuersignale von der elektronischen Steuereinheit über den ersten Datenbus zu empfangen und diese dann über den zweiten Datenbus an den oder die weiteren Aktoren zu übermitteln.

Der erste Aktor kann einen Mikrocontroller aufweisen, welcher zum Ausbilden einer ersten Datenkommunikationsverbindung über den ersten Datenbus einen ersten Datenbusanschluss und zum Ausbilden einer zweiten Datenkommunikationsverbindung über den zweiten Datenbus einen zweiten Datenbusanschluss aufweist, der getrennt von dem ersten Datenbusanschluss gebildet sind. Mit Hilfe der getrennten Ausbildung der Datenbusanschlüsse des Microcontrollers ist es dem ersten Aktor ermöglicht, eine jeweilige Datenkommunikationsverbindung über den ersten und den zweiten Datenbus auszubilden und diese getrennt voneinander insbesondere zum Empfangen und / oder Senden von Steuersignalen zu nutzen.

Der erste Aktor kann eine Schalteinrichtung aufweisen, die eingerichtet ist, den zweiten Datenbusanschluss und den zweiten Datenbus betriebsabhängig funktional zu trennen oder zu verbinden, derart, dass die zweite Datenkommunikationsverbindung hierdurch unterbrochen oder geschlossen sind. Je nach Schaltzustand der Schalteinrichtung ist so dem ersten Aktor, insbesondere dem Microcontroller des ersten Aktors, eine Datenkommunikation über den zweiten Datenbus ermöglicht oder unterbunden. Ist die Schalteinrichtung im geschlossenen Zustand, so dass die zweite Datenkommunikationsverbindung ausgebildet ist, ermöglicht dies die Datenkommunikation.

Es kann vorgesehen sein, dass der Microcontroller des ersten Aktors eingerichtet ist, die Schalteinrichtung zu steuern, derart, dass der Microcontroller Steuersignale erzeugt, die die Schalteinrichtung in den unterbrochenen (geöffneten) oder geschlossenen Zustand umschalten.

Die Schalteinrichtung kann eingerichtet sein, in einem Anfangszustand des ersten Aktors, welchen der erste Aktor nach dem Einschalten einer Spannungsversorgung für den ersten Aktor einnimmt, den zweiten Datenbusanschluss und den zweiten Datenbus funktional zu trennen, derart, dass die zweite Datenkommunikationsverbindung hierdurch unterbrochen ist. Wird für den ersten Aktor eine Spannungsversorgung zugeschaltet, um den ersten Aktor einzuschalten, ist die zweite Datenkommunikationsverbindung unterbrochen, so dass der erste Aktor in diesem Anfangszustand nicht in der Lage ist, Steuersignale über den zweiten Datenbus zu senden oder zu empfangen.

Die Schalteinrichtung kann eingerichtet sein, den zweiten Datenbusanschluss und den zweiten Datenbus in einem Arbeitszustand des ersten Aktors funktional zu verbinden, welchen der erste Aktor einnimmt, wenn für die erste Datenkommunikationsverbindung auf dem ersten Datenbus eine protokollbasierte Datenkommunikation zwischen der elektronischen Steuereinheit und dem ersten Aktor ausgebildet sind. Wenn der erste Aktor nach dem Einschalten der Spannungsversorgung eine protokollbasierte Datenkommunikation mit der elektronischen Steuereinheit aufgenommen hat, ist für den ersten Aktor der Arbeitszustand ausgebildet, in welchem die zweite Datenkommunikationsverbindung hergestellt wird. Sodann ist der erste Aktor im Arbeitszustand in der Lage, Steuersignale über den zweiten Datenbus zu senden und zu empfangen.

Eine protokollbasierte Datenkommunikation zwischen der elektronischen Steuereinheit und dem ersten Aktor kann insbesondere vorsehen, dass für den ersten Aktor einen Adresszuordnung auf dem ersten Datenbus erfolgt ist. Dieses ermöglicht es, von der elektronischen Steuereinheit erzeugte Steuersignale für die Aktoren der Anordnung von Aktoren auf dem ersten Datenbus an den ersten Aktor zu adressieren und zu übersenden.

Für das Übertragen von Steuersignalen auf dem ersten Datenbus können unterschiedliche Protokollstandards angewendet werden. Beispielsweise kann das J1939-Protokoll verwendet werden. J1939 ist ein Standard, der in der Nutzfahrzeugindustrie verwendet wird und zum Beispiel die Kommunikation zwischen Systemen oder Komponenten von Fahrzeugen ermöglicht. Die Prozesse und Maßnahmen zum Ausbilden der protokollbasierten Datenkommunikation sind im jeweiligen Standard festgelegt und können entsprechend angewendet werden, um die protokollbasierte Datenkommunikation zwischen elektronischer Steuereinheit und erstem Aktor auszubilden.

Die weiteren Aktoren können jeweils einen Mikrocontroller aufweisen, welcher zum Ausbilden einer jeweiligen Datenkommunikationsverbindung der weiteren Aktoren über den zweiten Datenbus mit einem ersten Datenbusanschluss gebildet ist. Bei dieser Ausgestaltung ist vorgesehen, dass nicht nur der erste Aktor, sondern auch die weiteren Aktoren der Anordnung von Aktoren jeweils einen Microcontroller aufweisen. Über einen ersten Datenbusanschluss des jeweiligen Microcontrollers ist eine Datenkommunikationsverbindung zum zweiten Datenbus ausbildbar, welcher für die Datenkommunikation zwischen den Aktoren der Anordnung von Aktoren eingerichtet ist.

Bei den weiteren Aktoren der Anordnung von Aktoren kann jeweils Folgendes vorgesehen sein: der erste Datenbusanschluss des Mikrocontrollers ist mit einem Signaleingang und einem Signalausgang verbunden, der Signaleingang eines folgenden Aktors ist mit dem Signalausgang eines vorangehenden Aktors zur Datenkommunikation funktional verbunden, und die weiteren Aktoren weisen jeweils eine Schalteinrichtung auf, die eingerichtet ist, die funktionale Verbindung zur Datenkommunikation zwischen dem Signaleingang des folgenden weiteren Aktors und dem Signalausgang des vorangehenden weiteren Aktors zu trennen und zu schließen.

Der erste Datenbusanschluss des jeweiligen Microcontrollers der weiteren Aktoren ist hier mit einem Signaleingang und einem Signalausgang verbunden. In der Anordnung sind die Aktoren aneinandergereiht, derart, dass der Signaleingang eines folgenden Aktors mit dem Signalausgang eines vorangehenden Aktors zur Datenkommunikation über den zweiten Datenbus funktional verbunden ist. Bei den weiteren Aktoren ist eine jeweilige Schalteinrichtung vorgesehen, die eingerichtet ist, die funktionale Verbindung zur Datenkommunikation zwischen dem Signaleingang des folgenden Aktors und dem Signalausgang des vorangehenden Aktors zu trennen und zu schließen. Auf diese Weise können die weiteren Aktoren der Anordnung von Aktoren jeweils separat zur Datenkommunikation zugeschaltet oder von dieser getrennt werden.

Der jeweilige verbleibende Aktor, insbesondere der Microcontroller des jeweiligen weiteren Aktors, kann so - über den ersten Datenbusanschluss - über den Signaleingang Steuersignale empfangen, die über den zweiten Datenbus übertragen werden und selbst über den Signalausgang Steuersignale auf den zweiten Datenbus geben.

Es kann vorgesehen sein, dass der Microcontroller der weiteren Aktoren jeweils eingerichtet ist, die zugeordnete Schalteinrichtung zu steuern.

Die Schalteinrichtung der weiteren Aktoren kann jeweils eingerichtet sein, in einem Anfangszustand des weiteren Aktors, welchen der weitere Aktor nach dem Einschalten einer Spannungsversorgung für den weiteren Aktor einnimmt, die funktionale Verbindung zwischen dem Signalausgang des vorangehenden weiteren Aktors und dem Signaleingang des folgenden weiteren Aktors zu trennen. Im Anfangszustand ist die Datenkommunikationsverbindung zwischen dem ersten Datenbusanschluss des Microcontrollers des weiteren Aktors und dessen Signalausgang getrennt, so dass eine Übertragung von Steuersignale über den zweiten Datenbus nicht möglich ist.

Die Schalteinrichtung der weiteren Aktoren kann jeweils eingerichtet sein, die funktionale Verbindung zwischen dem Signalausgang des weiteren Aktors und dem Signaleingang des folgenden weiteren Aktors in einem Arbeitszustand des weiteren Aktors zu schließen, welchen der weitere Aktor einnimmt, wenn dem weiteren Aktor auf dem zweiten Datenbus die Adresse zugeordnet ist.

Ist dem weiteren Aktor nach dem Einschalten der Spannungsversorgung (Anfangszustand) eine (Bus-)Adresse auf dem zweiten Datenbus zugeordnet, ist der weitere Aktor im Arbeitszustand. Der Signalausgang des weiteren Aktors und der Signaleingang des folgenden weiteren Aktors sind verbunden, so dass Steuersignale übermittelt werden können.

Die Zuordnung einer jeweiligen Adresse auf dem zweiten Datenbus kann beispielsweise derart erfolgen, dass zunächst der erste Aktor an den auf ihn folgenden weiteren Aktor in der Anordnung von Aktoren eine Such-Anfrage stellt, um zu prüfen, ob die Anordnung von Aktoren neben dem ersten Aktor einen weiteren oder zusätzlichen Aktor umfasst. Die Such-Anfrage kann, für den weiteren Aktor, welcher die Such-Anfrage empfängt, eine erste Adresse für den zweiten Datenbus umfassen. Der auf dem ersten Aktor folgende (weitere) Aktor kann die ihm übermittelte Adresse dann bestätigen, worauf dem folgenden (weiteren) Aktor eine Adresse auf dem zweiten Datenbus zugeordnet ist, so dass der folgende weitere Aktor in den Arbeitszustand versetzt ist.

Der auf den ersten Aktor folgende (weitere) Aktor kann sodann seinerseits eine Such-Anfrage an einen auf ihn folgenden weiteren Aktor übersenden, um auch diesem eine Adresse auf dem zweiten Datenbus zuzuordnen. Dieses Verfahren kann Stück für Stück, also Aktor für Aktor, fortgesetzt werden, bis sämtliche Aktoren der Anordnung von Aktoren eine Adresszuordnung für den zweiten Datenbus empfangen haben, wobei sich die Adressen der Aktoren unterscheiden, so dass diese für das Übertragen von Steuersignalen individuell adressierbar sind. Das Übermitteln einer Such-Anfrage zum Vergeben einer Adresse ist für einen Aktor in der Anordnung von Aktoren immer erst dann möglich, wenn der Aktor selbst im Arbeitszustand ist, der Aktor selbst also die Möglichkeit hat, Befehle oder Signale über den zweiten Datenbus zu übertragen.

Der erste Aktor und die weiteren Aktoren können zumindest hinsichtlich des jeweiligen Microcontrollers baugleich ausgeführt sein, derart, dass bei den weiteren Aktoren der jeweilige Mikrocontroller einen zweiten Datenbusanschluss aufweist. Die baugleiche Ausführung der Aktoren, wenigstens bezüglich des Microcontrollers, unterstützt ein mit wenig Aufwand ausführbares Austauschen der Aktoren in der Anordnung von Aktoren. Jeder Aktor kann dann als erster Aktor oder weiterer Aktor verwendet werden.

Es kann vorgesehen sein, dass der Microcontroller der weiteren Aktoren einen zweiten Datenbusanschluss aufweist, welcher bei Verwendung als weiterer Aktor freibleiben kann und bei der Nutzung als erster Aktor mit dem weiteren Datenbus verbindbar ist.

Die Aktoren der Anordnung von Aktoren können jeweils eingerichtet sein, als Reaktion auf das Einschalten einer jeweiligen Spannungsversorgung eine Aktor-Kalibrierung auszuführen. Die Aktor-Kalibrierung kann beispielsweise vorsehen, dass der Aktor hierbei einen Einstell- oder Arbeitsbereich des Aktors vollständig abfährt oder austestet, um zum Beispiel die möglichen Betriebszustände für den Aktor zu erfassen. Ist der Aktor zum Beispiel mit einem Elektromotor gebildet, kann beim Kalibrieren ein (maximaler) Verstell- oder Einstellbereich des Elektromotors bestimmt werden. Die Aktor-Kalibrierung kann mehrfach durchgeführt werden, beispielsweise nach jedem Einschalten der zuvor abgeschalteten Spannungsversorgung.

Es kann vorgesehen sein, die Aktor-Kalibrierung alternativ oder ergänzend als Reaktion auf andere Betriebsereignisse auszuführen oder zu wiederholen, zum Beispiel nach Ablauf vorbestimmter Betriebszeiten oder -intervalle des Aktors.

Die landwirtschaftliche Maschine kann als eine landwirtschaftliche Verteilmaschine wie Sämaschine oder Düngerstreuer ausgeführt sein, wobei die Aktoren der Anordnung von Aktoren jeweils einer Verteileinrichtung zugeordnet sind, mit der ein auszubringendes Material dosierbar ist. Landwirtschaftliche Verteilmaschinen dienen zum Ausbringen oder Verteilen eines auszubringenden Materials. Im Fall einer Sämaschine handelt es sich bei dem auszubringenden Material um ein Saatgut. Im Fall des Düngerstreuers ist das auszubringende Material ein Düngermaterial. Bei dieser oder anderen Ausgestaltungen können die Aktoren mit einem jeweiligen Elektromotor gebildet sein, welche dazu dienen, in unterschiedlichen Betriebszuständen eine oder mehrere Zuführ- oder Transportleitungen für das auszubringende Material wie Saatgut oder Dünger zu öffnen und zu schließen. Hierzu können die Elektromotoren zum Beispiel mit einem Ventil oder einer Klappe wirkverbunden sein, mit denen die Zuführ- oder Transportleitung geöffnet oder geschlossen werden kann. Beim Umschalten zwischen den Betriebszuständen kann hierbei in einer Ausgestaltung das Umschalten oder Einnehmen von einer kontinuierlichen Abfolge von Ventil- oder Klappenstellungen (kontinuierliche Ventil- oder Klappenstellungen) vorgesehen sein.

In Verbindung mit Sämaschinen ist es beispielsweise bekannt, Saatgut mittels Unterstützung eines Luftstroms in Zuführ- oder Transportleitungen zu transportieren. Die mit einem Elektromotor ausgestatteten Aktoren können dann gesteuert werden, um in den unterschiedlichen Betriebszuständen den luftunterstützten Transport des Saatguts in den Leitungen zu ermöglichen oder zu unterbinden. Auf diese Weise kann das Saatgut zum Beispiel einer oder mehreren Säreihen dosiert zugeführt werden. Hierfür sind sogenannte Verteilerköpfe bekannt, in denen das auszubringende Saatgut empfangen und dann auf mehrere Zuführ- oder Transportleitungen verteilt wird, um es den Säreihen dosiert zuzuführen. Der Verteilerkopf kann mit der Anordnung von Aktoren ausgebildet sein, welche mit Hilfe der beschriebenen Technologie im Betrieb gesteuert werden können.

In ähnlicher Weise können die Aktoren jeweils einem Dosierorgan eines Düngerstreuers zugeordnet sein. Aber auch in anderen landwirtschaftlichen Maschinen können die Aktoren verwendet werden, zum Beispiel zum Verlagern von Arbeitswerkzeugen, insbesondere Arbeitswerkzeuge zur Bodenbearbeitung einer Bodenbearbeitungsmaschine wie Pflug oder dergleichen, oder zum Betreiben von Sprühdüsen einer landwirtschaftliche Sprühmaschine.

Der erste und / oder der zweite Datenbus können in einer Ausgestaltung als CAN-Bus (CAN - Controller Area Network) ausgeführt sein. Der CAN-Bus ist ein serielles Bussystem und gehört zu den Feldbussen. CAN ist in ISO 11898-1 international standardisiert und definiert Layer 2 (Datensicherungsschicht) im ISO / OSI-Referenzmodell. Aktuell gängige Realisierungen der physischen Schichten sind nach ISO 11898-2 ("Highspeed physical layer") und ISO 11898-3 ("Fault tolerant physical layer") definiert. Eine CAN-Busleitung weist an jedem Ende einen Abschlusswiderstand auf.

Die vorangehend in Verbindung mit der landwirtschaftlichen Maschine erläuterten Ausgestaltungen können im Zusammenhang mit dem Verfahren zum Betreiben der Anordnung von Aktoren einer landwirtschaftlichen Maschine entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung von Funktionselementen einer landwirtschaftlichen Maschine mit einer Anordnung von Aktoren;
- Fig. 2: eine schematische Darstellung eines ersten Aktors aus einer Anordnung von Aktoren in einem Anfangszustand;
- Fig. 3: eine schematische Darstellung des ersten Aktors aus Fig. 2 in einem Arbeitszustand;
- Fig. 4: eine schematische Darstellung von aufeinanderfolgenden Aktoren in einer Anordnung von Aktoren, wobei die aufeinanderfolgenden Aktoren jeweils in einem Anfangszustand sind;
- Fig. 5: die Anordnung von aufeinanderfolgenden Aktoren aus Fig. 4, wobei ein vorangehender Aktor in einem Arbeitszustand ist;
- Fig. 6: eine schematische Darstellung der aufeinanderfolgenden Aktoren aus Fig. 4, wobei die aufeinanderfolgenden Aktoren im Arbeitszustand sind;
- Fig. 7: eine schematische Darstellung in Verbindung mit dem Einschalten einer Spannungsversorgung für einen Aktor;
- Fig. 8: eine schematische Darstellung in Verbindung mit einer Adresszuordnung für einen Aktor und
- Fig. 9: eine schematische Darstellung in Verbindung mit einer weiteren Adresszuordnung in der Anordnung von Aktoren.

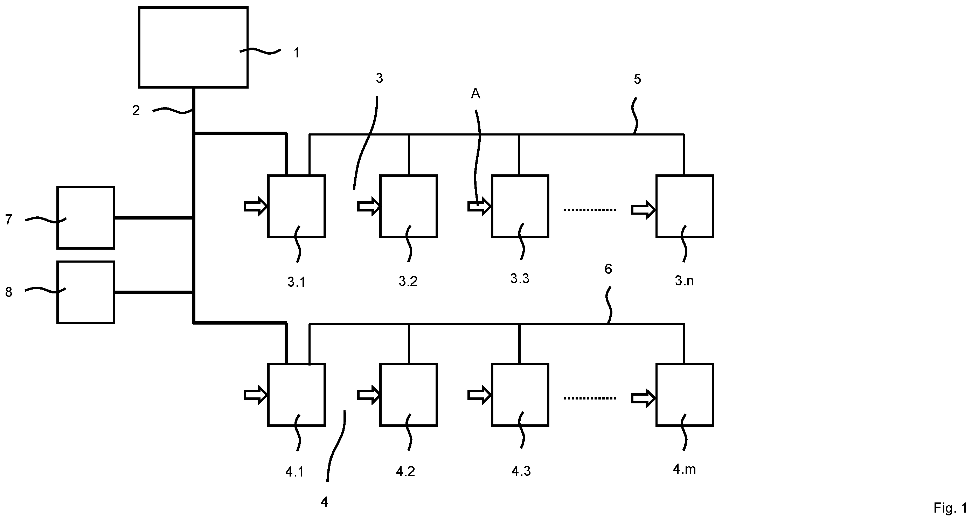

Fig. 1 zeigt eine schematische Darstellung von Funktionselementen oder -komponenten einer landwirtschaftlichen Maschine. Die landwirtschaftliche Maschine kann beispielsweise ein Anhängefahrzeug sein, welches im landwirtschaftlichen Betrieb an einen Schlepper angehangen und von diesem gezogen wird. Die landwirtschaftliche Maschine kann bei einer anderen Ausgestaltung eine selbstfahrende landwirtschaftliche Maschine sein. Bei einer weiteren Ausführungsform kann die landwirtschaftliche Maschine von einem Schlepper gehalten oder getragen werden. Solche landwirtschaftlichen Maschinen sind beispielsweise als Sämaschine, Düngerstreuer, Bodenbearbeitungsmaschine, Mähmaschine oder Sprühmaschine bekannt.

Gemäß Fig. 1 umfasst die Anordnung von Funktionselementen der landwirtschaftlichen Maschine eine elektronische Steuereinheit 1, zum Beispiel in Form einer ECU (Electronic Control Unit).

Über einen ersten Datenbus 2 ist die elektronische Steuereinheit 1 mit einer Anordnung von Aktoren 3 sowie einer zusätzlichen Anordnung von Aktoren 4 verbunden. Die Anordnung von Aktoren 3 umfasst einen ersten Aktor 3.1 sowie weitere Aktoren 3.2, ..., 3.n. Lediglich der erste Aktor 3.1 ist mit dem ersten Datenbus 2 verbunden, wohingegen die weiteren Aktoren 3.2, ..., 3.n frei von einer funktionalen Verbindung mit dem ersten Datenbus 2 gebildet sind. Demgegenüber sind sämtliche Aktoren 3.1, ..., 3.n der Anordnung von Aktoren 3 jeweils mit einen zweiten Datenbus 5 verbunden, der für die Anordnung von Aktoren 3 einen internen Datenbus bildet.

In ähnlicher Weise ist die zusätzliche Anordnung von Aktoren 4 mit einem zugeordneten zweiten Datenbus 6 ausgeführt. Auch bei der zusätzlichen Anordnung von Aktoren 4 ist nur der erste Aktor 4.1 mit dem ersten Datenbus 2 verbunden.

Die Aktoren 3.1, ..., 3.n, 4.1, ..., 4.n können jeweils als eine antriebstechnische Baueinheit ausgeführt sein, die ein Signal oder Steuersignal insbesondere in mechanische Bewegung, Kraft, Druck oder Drehmoment umsetzt. Zu Aktoren, die bei landwirtschaftlichen Maschinen zum Einsatz kommen, zählen zum Beispiel Elektromotoren, Hydraulik- oder Pneumatik-Aktoren oder auch pneumatische, hydraulische oder elektrische Zylinder.

Gemäß dem Ausführungsbeispiel in Fig. 1 sind an dem ersten Datenbus 2 weitere Funktionskomponenten 7, 8 jeweils angeschlossen, so dass diese elektronische Steuersignale von der elektronischen Steuereinheit 1 empfangen und an diese übermitteln können. Die weiteren Funktionselemente 7, 8 können zum Beispiel ein Terminal mit einer Nutzerschnittstelle umfassen. Auch kann es sich um Steuereinheiten in Form einer jeweiligen ECU handeln.

Die Aktoren 3.1, ..., 3.n sowie die zusätzlichen Aktoren 4.1, ..., 4.n können jeweils von gleicher oder unterschiedlicher Bauart sein. Die Aktoren der landwirtschaftlichen Maschine können zum Beispiel mit einem Elektromotor gebildet sein, als Hydraulik-Aktor oder Pneumatik-Aktor ausgeführt sein oder einen hydraulischen, elektrischen oder pneumatischen Zylinder aufweisen. Neben einem oder mehreren Datenbusanschlüssen zum Anschließen an den ersten Datenbus 2 und / oder den zweiten Datenbus 5, 6 verfügen die Aktoren jeweils über einen Anschluss für eine Spannungsversorgung, was in Fig. 1 mittels eines jeweiligen Pfeils A schematisch dargestellt ist. Auf diese Weise ist jeder der Aktoren an die Spannungsversorgung anschließbar oder hiervon trennbar, insbesondere zum Ein- und Ausschalten.

Im Folgenden werden weitere Aspekte unter Bezugnahme auf die Anordnung von Aktoren 3 erläutert. Dieses gilt entsprechend im Zusammenhang mit der zusätzlichen Anordnung von Aktoren 4.

Die elektronische Steuereinheit 1 ist eingerichtet, Steuersignale zu erzeugen, die einem oder mehreren der Aktoren 3.1, ..., 3.n zugeordnet und eingerichtet sind, den jeweiligen Aktor zwischen zumindest einem ersten und zumindest einem zweiten Betriebszustand umzuschalten. Sind die Aktoren 3.1, ..., 3.n zum Beispiel mit einem jeweiligen Elektromotor auf einer landwirtschaftlichen Sämaschine ausgeführt, können die Steuersignale eingerichtet sein, mit Hilfe der Elektromotoren Klappen oder Ventile zwischen Betriebszuständen umzuschalten, um so den Transport von Saatgut in Zuführ- oder Transportleitungen der Sämaschine zu unterbrechen oder zuzulassen. So kann bei diesem Beispiel die Anordnung von Aktoren 3 beispielsweise eine Anordnung von Elektromotoren sein, die einem Verteilerkopf der Sämaschine zugeordnet ist, mit dem die dosierte Zuführung des Saatguts zu mehreren Säreihen der Sämaschine gesteuert wird.

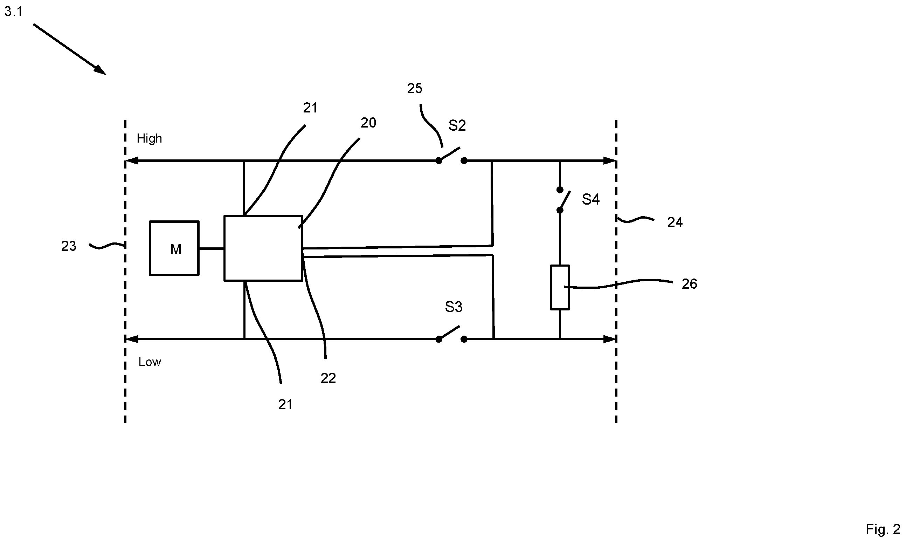

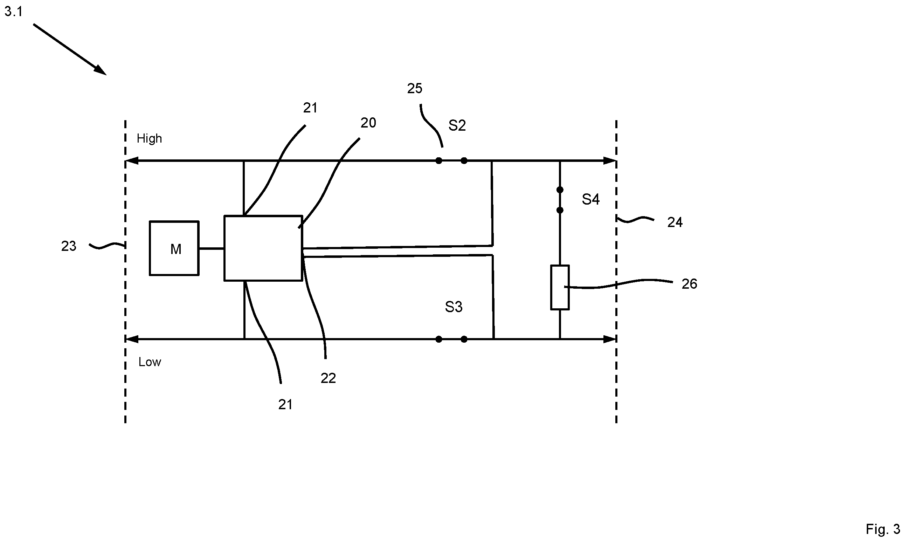

Die Fig. 2 und 3 zeigen jeweils eine schematische Darstellung für den ersten Aktor 3.1., welcher sowohl mit dem ersten Datenbus 2 wie auch dem zweiten Datenbus 5 verbindbar ist. Auf diese Weise ist der erste Aktor 3.1 der Anordnung von Aktoren 3 betreibbar, einerseits Steuersignale von der elektronischen Steuereinheit 2 über den ersten Datenbus 2 zu empfangen und andererseits über den zweiten Datenbus 5 Steuersignale mit den weiteren Aktoren 3.2, ..., 3.n der Anordnung von Aktoren 3 auszutauschen, insbesondere von der elektronischen Steuereinheit 1 empfangene Steuersignale an die weiteren Aktoren 3.2, ..., 3.n zu übermitteln. Der erste Aktor 3.1 übernimmt in diesem Sinne eine Brückenfunktion zwischen dem ersten Datenbus 2 und dem zweiten Datenbus 5. Die elektronische Steuereinheit 1 adressiert die Steuersignale für die Aktoren 3.1, ..., 3.n auf dem ersten Datenbus 2 an den ersten Aktor 3.1. Der erste Aktor 3.1 empfängt diese Steuersignale über den ersten Datenbus und sendet sie, wenn die Steuersignale einem der weiteren Aktoren 3.2, ..., 3.n zugeordnet sind, über den zweiten Datenbus an die weiteren Aktoren 3.2, ..., 3.n. Aus Sicht der elektronischen Steuereinheit 1 ist für die Übertragung der erzeugten elektronischen Steuersignale im Betrieb eine einzelne Adressierung allein an den ersten Aktor 3.1 ermöglicht. Auf dem ersten Datenbus 2 ist der Anordnung von Aktoren 3 lediglich eine einzige (Bus-)Adresse zugeordnet, so dass die von der Anordnung von Aktoren 3 benötige Anzahl von Adressen auf dem ersten Datenbus 2 minimiert ist.

Gemäß Fig. 2 weist der erste Aktor 3.1 einen Microcontroller 20 auf, welcher mit einem ersten Datenbusanschluss 21 und einem zweiten Datenbusanschluss 22 gebildet ist. Der erste Datenbusanschluss 21 verbindet den Microcontroller 20 mit einem Signaleingang 23 des ersten Aktors 3.1. Hierüber ist der Microcontroller 20 mit dem ersten Datenbus 2 verbindbar.

Der zweite Datenbusanschluss 22 des Microcontrollers 20 ist mit einem Signalausgang 24 verbunden, über den ein Anschluss an den zweiten Datenbus 5 ermöglicht ist.

Im gezeigten Beispiel ist der erste Aktor 3.1 mit einem Elektromotor M gebildet, dessen Betriebszustände mittels des Mikrocontrollers 20 gesteuert werden.

Eine Schalteinrichtung 25 umfasst Schalter S2, S3, S4 und ist eingerichtet, zum Verbinden mit dem zweiten Datenbus 5 den zweiten Datenbusanschluss 22 des Microcontrollers 20 mit dem Signalausgang 24 funktional zu verbinden oder zu trennen. In einem in Fig. 2 gezeigten Anfangszustand sind die Schalter S2, S3, S4 jeweils geöffnet, so dass für den ersten Aktor 3.1 keine Datenkommunikation über den zweiten Datenbus 5 ermöglicht ist. Der Signalausgang 24 ist von dem Datenbusanschluss 22 des Microcontrollers 20 funktional getrennt.

Gemäß Fig. 2 ist weiterhin ein Widerstand 26 in Reihe mit dem Schalter S4 angeordnet. Mit dem Widerstand 26 ist ein Abschlusswiderstand gebildet, welcher mittels des Schalters S4 aktivierbar und deaktivierbar ist.

Fig. 3 zeigt eine schematische Darstellung des ersten Aktors 3.1 in einem Arbeits- oder Betriebszustand, in welchem die Schalteinrichtung 25 mit dem Schaltern S2, S3, S4 geschlossen ist, so dass der zweite Datenbusanschluss 22 des Microcontrollers 20 mit dem Signalausgang 24 funktional verbunden ist, wodurch für den ersten Aktor 3.1 eine Datenkommunikationsverbindung zum zweiten Datenbus 5 ausgebildet ist. In der Anordnung von Aktoren 3 kann der erste Aktor 3.1 sodann Datensignale über den zweiten Datenbus 5 aussenden, insbesondere Steuersignale, die der erste Aktor 3.1 über den ersten Datenbus 2 von der elektronischen Steuereinheit 1 empfangen hat.

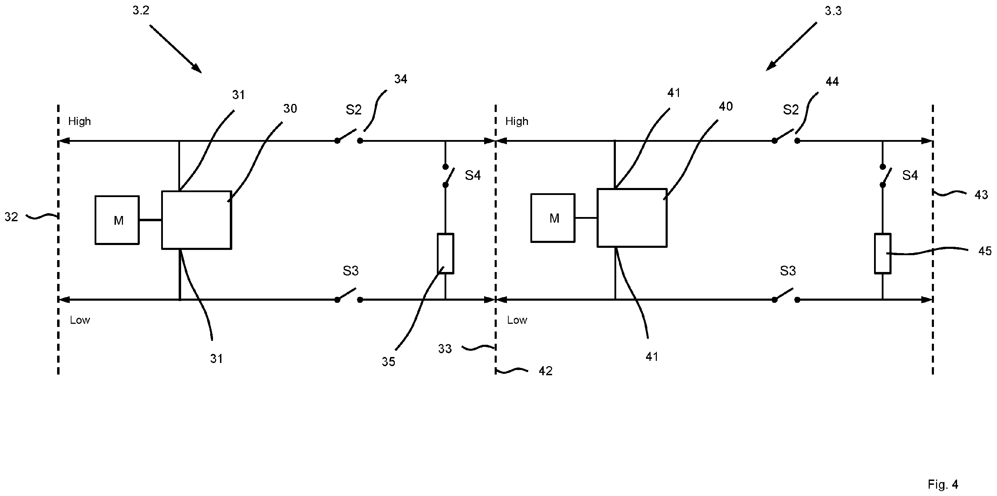

Fig. 4 bis 6 zeigen zwei aufeinanderfolgende Aktoren in der Anordnung von Aktoren 3 in unterschiedlichen Betriebszuständen, beispielhaft die weiteren Aktoren 3.2, 3.3.

Der weitere Aktor 3.2 weist einen Microcontroller 30 mit einem ersten Datenbusanschluss 31 auf. Über den ersten Datenbusanschluss 31 ist der Microcontroller 30 mit dem zweiten Datenbus 5 verbindbar. Ein Signaleingang 32 des weiteren Aktors 3.2 ist mit dem Signalausgang 24 des ersten Aktors 3.1 verbunden. Weiterhin weist der verbleibende Aktor 3.2 einen Signalausgang 33 auf.

Dem weiteren Aktor 3.2 ist eine Schalteinrichtung 34 mit Schaltern S2, S3, S4 zugeordnet. Weiterhin ist ein Widerstand 35 vorgesehen, mit dem ein Abschlusswiderstand ausgebildet ist, welcher mittels des Schalters S4 aktivier-bar und deaktivierbar ist. Mit Hilfe der Schalteinrichtung 34 kann die funktionale Verbindung des ersten Datenbusanschlusses 31 mit dem Signalausgang 33 unterbrochen oder geschlossen werden.

Der auf den weiteren Aktor 3.2 folgende weitere Aktor 3.3 weist einen Microcontroller 40 mit einem ersten Datenbusanschluss 41 auf, welcher mit einem Signaleingang 42 verbunden ist. Ein Signalausgang 43 ist mit Hilfe einer Schalteinrichtung 44 mit dem ersten Datenbusanschluss 41 verbindbar oder hiervon trennbar. Weiterhin ist ein Widerstand 45 vorgesehen, mit dem ein Abschlusswiderstand ausgebildet ist, welcher mittels des Schalters S4 aktivierbar und deaktivierbar ist.

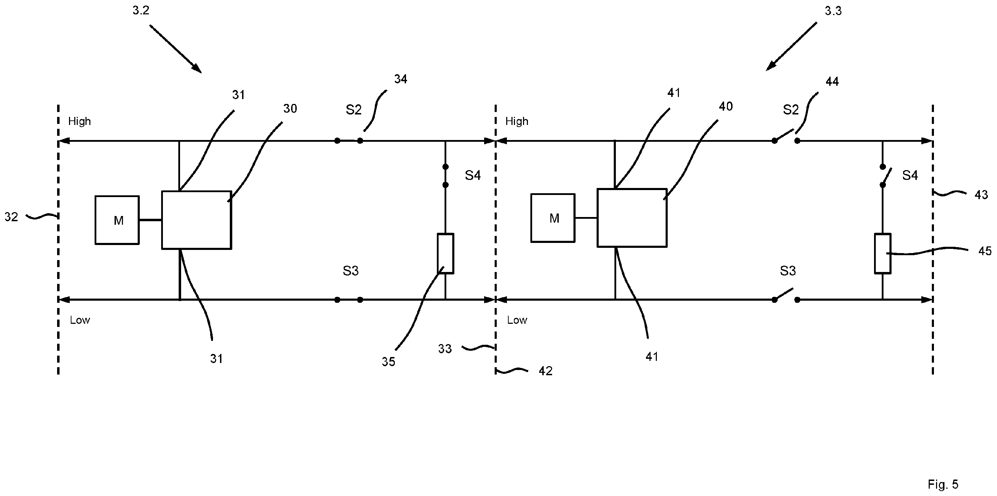

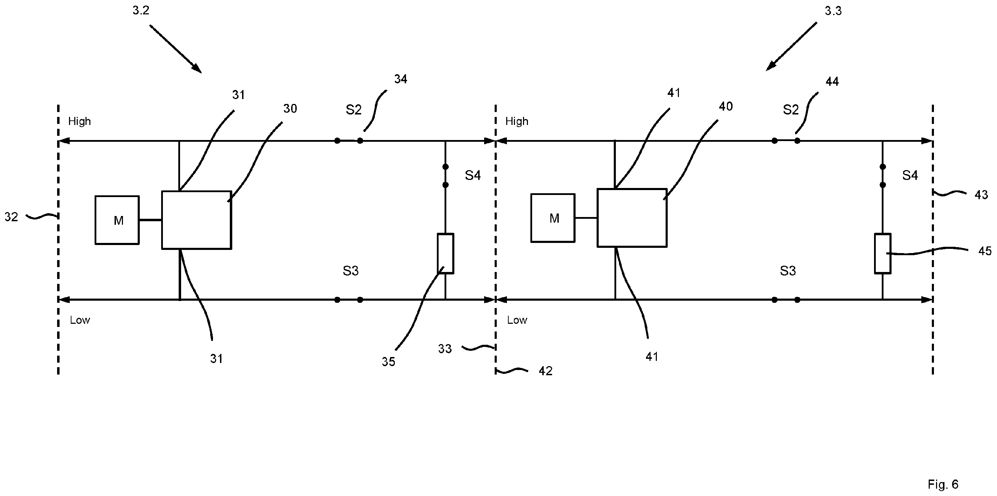

Mit Hilfe der Schalteinrichtung 34 kann der weitere Aktor 3.2 aus dem in Fig. 4 gezeigten Anfangszustand in einen Arbeitszustand versetzt werden, der in Fig. 5 gezeigt ist. Gemäß Fig. 5 ist zu diesem Zeitpunkt der folgende weitere Aktor 3.3 selbst noch im Anfangszustand, die Schalter S2, S3, S4 der Schalteinrichtung 44 sind also jeweils geöffnet. Mittels Schließen der Schalter S2, S3, S4 der Schalteinrichtung 44 kann auch der folgende weitere Aktor 3.3 gemäß Fig. 6 in den Arbeitszustand versetzt werden, so dass der erste Datenbusanschluss 41 mit dem Signalausgang 43 funktional verbunden ist, so dass eine Datenkommunikation über den Signalausgang 43 auf dem zweiten Datenbus 5 ermöglicht ist.

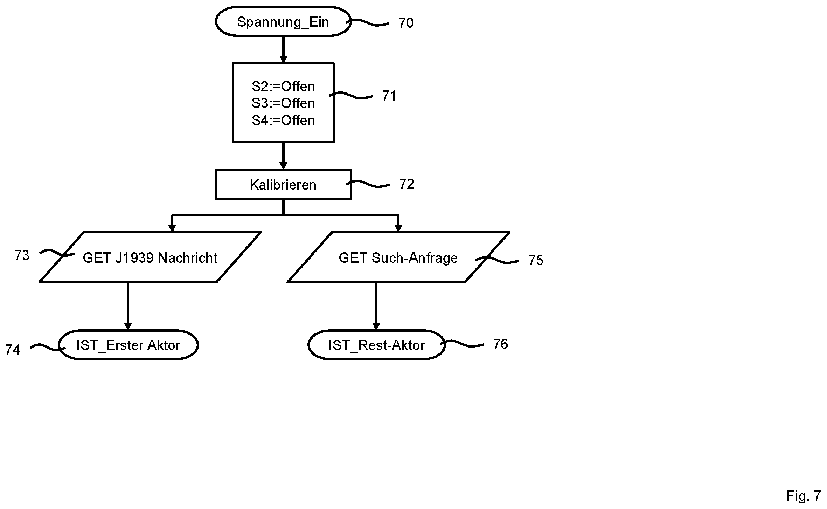

Ausgehend von den Erläuterungen in Verbindung mit den Fig. 2 bis 6 ist es so ermöglicht, für den jeweiligen Aktor je nach gewünschtem Betriebszustand eine funktionale Verbindung zum zweiten Datenbus 5 herzustellen oder zu unterbrechen, sodass eine Datenkommunikation ermöglichst oder unterbunden ist. Im Betrieb der landwirtschaftlichen Maschine, insbesondere nach einem Einschalt- oder Zuschaltvorgang für die einzelnen Aktoren 3.1., ...3.n der Anordnung von Aktoren 3, ermöglicht dies ein schrittweises Vorgehen zum Ausbilden einer gewünschten Datenkommunikation zwischen der elektronischen Steuereinheit 1 und der Anordnung von Aktoren 3 unter Einbeziehung des ersten und den zweiten Datenbusses 2, 5, was insbesondere das Zuordnen von individuellen (Bus-)Adressen für die Aktoren 3.1, ..., 3.n vorsieht. Dies wird nachfolgend unter Bezugnahme auf die Fig. 7 bis 9 weiter erläutert.

Fig. 7 zeigt eine schematische Darstellung im Zusammenhang mit dem Einschalten des ersten Aktors 3.1, also dem Zuschalten einer Spannungsversorgung für den ersten Aktor 3.1 in einem Schritt 70. Gemäß Schritt 71 sind die Schalter S2, S3, S4 der Schalteinrichtung 25 des ersten Aktors 3.1 zu diesem Zeitpunkt offen. Bei dem gezeigten Beispiel in Fig. 7 wird für den ersten Aktor 3.1 sodann eine Aktor-Kalibrierung im Schritt 72 ausgeführt. Ist der erste Aktor 3.1 zum Beispiel mit einem Elektromotor gebildet, umfasst die Aktor-Kalibrierung beispielweise ein Verstellen des Elektromotors über seinen gesamten Einstellbereih, um so den ersten Aktor 3.1 zu kalibrieren, wie dies als solches bekannt ist.

Der Microcontroller 20 des ersten Aktors 3.1 prüft dann von ihm empfangene Datensignale darauf, ob es sich um eine Protokoll-Nachricht zum Ausbilden einer protokollbasierten Datenkommunikation auf dem ersten Datenbus 2 handelt, zum Beispiel eine "J1939 Nachricht" gemäß dem Protokoll-Standard J1939 (Schritt 73). Ist dies der Fall, handelt es sich bei dem ersten Aktor 3.1 tatsächlich um den Aktor der Anordnung von Aktoren 3, welcher mit dem ersten Datenbus 2 verbunden ist (Schritt 74). Nur der erste Aktor 3.1 der Anordnung von Aktoren 3 kann eine solche Nachricht zum Ausbilden der protokollbasierten Datenkommunikation empfangen, da nur der erste Aktor 3.1 mit dem ersten Datenbus 2 verbunden ist.

Empfängt der Microcontroller des empfangenen Aktors jedoch eine Such-Anfrage (Schritt 75), erkennt der Microcontroller des Aktors, dass er selbst nicht der erste Aktor in der Anordnung von Aktoren 3 ist, sondern einer der weiteren Aktoren 3.2, ..., 3.n ("Rest-Aktor", Schritt 76).

Wird die "J1939 Nachricht" im Schritt 73 empfangen, erfolgt hierauf eine Adresszuordnung für den ersten Aktor 3.1 auf dem ersten Datenbus 2, so dass die elektronische Steuereinheit 1 Steuersignale für einen oder mehrere der Aktoren 3.1, ..., 3.n über den ersten Datenbus 2 an den ersten Aktor 3.1 adressieren und senden kann. Auf das Etablieren der protokollbasierten Datenkommunikation werden für den ersten Aktor 3.1 die Schalter S2, S3, S4 der Schalteinrichtung 25 geschlossen. Der erste Aktor ist dann im Arbeitszustand.

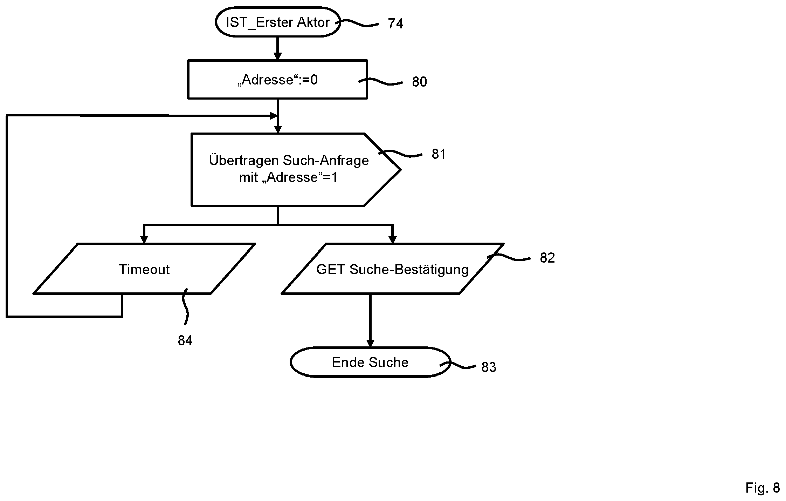

Sodann wird gemäß Fig. 8 in einem Schritt 80 dem ersten Aktor 3.1 eine (erste) Adresse "0" auf dem zweiten Datenbus 5 zugeordnet. Der erste Aktor 3.1 sendet danach über den zweiten Datenbus 5 eine Such-Anfrage mit der (zweiten) Adresse "1" im Schritt 81. Diese Such-Anfrage wird vom weiteren Aktor 3.2 empfangen, welcher in der Anordnung von Aktoren 3 auf den ersten Aktor 3.1 folgt, und gegenüber dem ersten Aktor 3.1 bestätigt (vgl. Schritt 82), worauf der erste Aktor 3.1 seine Suche nach einem auf ihn in der Anordnung von Aktoren 3 folgenden (weiteren) Aktor im Schritt 83 beendet. Erfolgt keine Suche-Bestätigung, folgt ein "Timeout" gemäß Schritt 84.

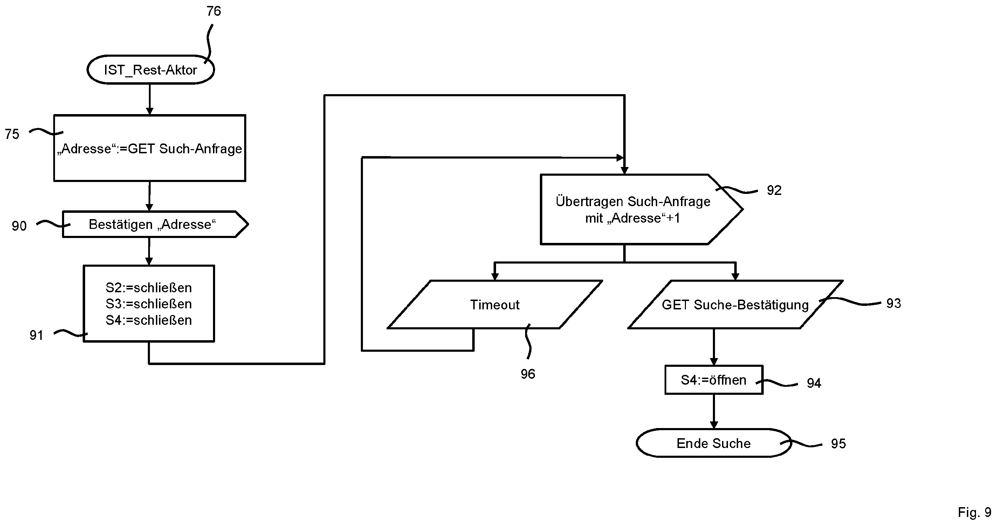

Fig. 9 zeigt schematisch den weiteren Ablauf, nachdem der auf den ersten Aktor 3.1 folgende weitere Aktor 3.2 die Such-Anfrage bestätigt hat, wodurch dem weiteren Aktor 3.2 auf den zweiten Datenbus 5 die (zweite) Adresse "1" zugeordnet ist. Sodann agiert der weitere Aktor 3.2 ähnlich, dahingehend, dass nach dem Empfangen der Such-Anfrage (Schirtt75) und einem folgenden Bestätigen der Adresse (Schritt 90) die Schalter S2, S3, S4 der Schalteinrichtung 34 im Schritt 91 geschlossen werden, um sodann im Schritt 92 eine Such-Anfrage über den zweiten Datenbus 5 an den weiteren Aktor 3.3 zu übersenden, um diesem auf dem zweiten Datenbus 5 eine Adresse zuzuordnen, wenn der weitere Aktor 3.3 im Schritt 93 die Such-Anfrage bestätigt.

Auf diese Weise wird den weiteren Aktoren 3.2, ..., 3.n Schritt für Schritt jeweils eine Adresse auf dem zweiten Datenbus 5 zugeordnet.

Für den weiteren Aktor 3.3, welcher auf den weiteren Aktor 3.2 folgt, wird dann im Schritt 94 der Schalter S4 geöffnet und im Schritt 95 endet die Suche nach weiteren Aktoren in der Anordnung von Aktoren 3, wobei die Suche üblicherweise bis zum Aktor 3.n ausgeführt wird. Durch Schalter S4 ist eingerichtet, einen Abschlusswiderstand des zweiten Datenbusses 5 zu aktivieren und zu deaktivieren. Zum Beispiel ist bei einer Ausführung als CAN-Bus am Anfang und am Ende des physikalischen Datenbusses jeweils ein solcher Abschlusswiderstand vorgesehen. Da sich der zweite Datenbus 5 gemäß dem beschriebenen Verfahren stückchenweise verlängert, wird jeweils der Abschlusswiderstand Aktor für Aktor weiter nach hinten versetzt werden, schließlich zum Aktor 3.n. So wird sichergestellt, dass stets ein ordentlich abgeschlossener Datenbus vorliegt.

Andernfalls erfolgt ein "Timeout" (Schritt 96).

Zusammenfassend wurden mit Hilfe des beschriebenen Verfahrens dem ersten Aktor 3.1 eine jeweilige Adresse auf dem ersten Datenbus 2 und dem zweiten Datenbus 5 sowie den weiteren Aktoren 3.2, ..., 3.n eine jeweilige Adresse auf dem zweiten Datenbus 5 zugeordnet. Dieses ermöglicht es dann, die von der elektronischen Steuereinheit 1 erzeugten Steuersignale für die Aktoren 3.1, ..., 3.n über den ersten Datenbus 2 zum ersten Aktor 3.1 und von diesem über den zweiten Datenbus 5 an die weiteren Aktoren 3.2, ..., 3.n individuell zu übermitteln.

Alle Aktoren 3.1, ..., 3.n der Anordnung von Aktoren 3 erhalten eine eindeutige Adresse am zweiten Datenbus 5. Die eindeutige Zuordnung der Aktoren 3.1, ..., 3.n zu den Adressen erfolgt, da in der Einschaltphase ein Aktor nach dem anderen dem zweiten Datenbus 5 hinzugefügt wird. So ist eine Adressierung entsprechend der physikalischen Anschlussreihenfolge ermöglicht.

Mit der vorgeschlagenen Technologie wird für landwirtschaftliche Maschinen ein verbesserter Betrieb in Verbindung mit der Anordnung von Aktoren 3 erreicht. Bei Datenbus-Verkabelungen sind üblicherweise alle Datenbus-Teilnehmer, also beispielweise die Aktoren, gleichzeitig an dem Datenbus angeschlossen und somit gleichberechtigte Teilnehmer. Wenn dann alle Aktoren gleichzeitig eingeschaltet werden, kann bei bekannten Vorgehensweisen von den Aktoren selbst nicht festgestellt werden, an welcher physikalischen Position (Adresse) des Datenbusses sich der einzelne Aktor befindet. Das kann zu Problemen bei der Adress-Zuordnung führen. Mit der hier vorgeschlagenen Technologie wird dieses Problem gelöst: Die Adressen der Aktoren 3.1, ..., 3.n werden entsprechend der physikalischen Anschluss-Reihenfolge eindeutig vergeben, und gleichzeitig ist eine Datenbus-Topologie gewährleistet.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Landwirtschaftliche Maschine, mit:
- einer Anordnung von Aktoren (3), die jeweils zwischen einem ersten und einem zweiten Betriebszustand umschaltbar sind;
- einer elektronischen Steuereinheit (1), die betreibbar ist, den Aktoren (3.1, ..., 3.n) der Anordnung von Aktoren (3) jeweils zugeordnete Steuersignale zum Umschalten zwischen dem ersten und dem zweiten Betriebszustand zu erzeugen;
- einem ersten Datenbus (2), wobei
- die elektronische Steuereinheit (1) und ein erster Aktor (3.1) der Anordnung von Aktoren (3) mit dem ersten Datenbus (2) verbunden sind, derart, dass die den Aktoren (3.1, ..., 3.n) jeweils zugeordneten Steuersignale von der elektronischen Steuereinheit (1) über den ersten Datenbus (2) an den ersten Aktor (3.1) übertragbar sind,
- dem ersten Aktor (3.1) eine Adresse auf dem ersten Datenbus (2) zugeordnet ist, derart, dass die den Aktoren (3.1, ..., 3.n) jeweils zugeordneten Steuersignale von der elektronischen Steuereinheit (1) zum Übermitteln an den ersten Aktor (3.1) an die Adresse auf dem ersten Datenbus (2) adressierbar sind, und
- alle weiteren Aktoren (3.2, ..., 3.n) der Anordnung von Aktoren (3) frei von einer Datenkommunikationsverbindung mit dem ersten Datenbus (2) gebildet sind; und
- einem zweiten Datenbus (5), wobei
- der zweite Datenbus (5) getrennt von dem ersten Datenbus (2) gebildet ist,
- der erste Aktor (3.1) sowie alle weiteren Aktoren (3.2, ..., 3.n) der Anordnung von Aktoren (3) mit dem zweiten Datenbus (5) verbunden sind, derart, dass den weiteren Aktoren (3.2, ..., 3.n) zugeordnete Steuersignale von dem ersten Aktor (3.1) an einen oder alle weiteren Aktoren (3.2, ..., 3.n) über den zweiten Datenbus (5) übertragbar sind, und
- die elektronische Steuereinheit (1) frei von einer Datenkommunikationsverbindung mit dem zweiten Datenbus (5) gebildet ist.

2. Landwirtschaftliche Maschine nach Anspruch 1, **dadurch gekennzeichnet, dass** den Aktoren (3.1, ..., 3.n) jeweils eine Adresse auf dem zweiten Datenbus (5) zugeordnet ist, derart, dass die den weiteren Aktoren (3.2, ..., 3.n) jeweils zugeordneten Steuersignale von dem ersten Aktor (3.1) zum Übermitteln an den jeweiligen weiteren Aktor an dessen Adresse auf dem zweiten Datenbus (5) adressierbar sind.

3. Landwirtschaftliche Maschine nach Anspruch 1 oder 2, **dadurch gekennzeichnet, dass** der erste Aktor (3.1) einen Mikrocontroller (20) aufweist, welcher zum Ausbilden einer ersten Datenkommunikationsverbindung über den ersten Datenbus (2) einen ersten Datenbusanschluss (21) und zum Ausbilden einer zweiten Datenkommunikationsverbindung über den zweiten Datenbus (5) einen zweiten Datenbusanschluss (22) aufweist, der getrennt von dem ersten Datenbusanschluss (21) gebildet ist.

4. Landwirtschaftliche Maschine nach Anspruch 3, **dadurch gekennzeichnet, dass** der erste Aktor (3.1) eine Schalteinrichtung (25) aufweist, die eingerichtet ist, den zweiten Datenbusanschluss (22) und den zweiten Datenbus (5) betriebsabhängig funktional zu trennen oder zu verbinden, derart, dass die zweite Datenkommunikationsverbindung hierdurch unterbrochen oder geschlossen ist.

5. Landwirtschaftliche Maschine nach Anspruch 4, **dadurch gekennzeichnet, dass** die Schalteinrichtung (25) eingerichtet ist, in einem Anfangszustand des ersten Aktors (3.1), welchen der erste Aktor (3.1) nach dem Einschalten einer Spannungsversorgung für den ersten Aktor (3.1) einnimmt, den zweiten Datenbusanschluss (22) und den zweiten Datenbus (5) funktional zu trennen, derart, dass die zweite Datenkommunikationsverbindung hierdurch unterbrochen ist.

6. Landwirtschaftliche Maschine nach Anspruch 4 oder 5, **dadurch gekennzeichnet, dass** die Schalteinrichtung (25) eingerichtet ist, den zweiten Datenbusanschluss (22) und den zweiten Datenbus (5) in einem Arbeitszustand des ersten Aktors (3.1) funktional zu verbinden, welchen der erste Aktor (3.1) einnimmt, wenn für die erste Datenkommunikationsverbindung auf dem ersten Datenbus (2) eine protokollbasierte Datenkommunikation zwischen der elektronischen Steuereinheit (1) und dem ersten Aktor (3.1) ausgebildet ist.

7. Landwirtschaftliche Maschine nach mindestens einem der vorangehenden Ansprüche, **dadurch gekennzeichnet, dass** die weiteren Aktoren (3.2, ..., 3.n) jeweils einen Mikrocontroller (30; 40) aufweisen, welcher zum Ausbilden einer jeweiligen Datenkommunikationsverbindung der verbleibenden Aktoren (3.2, ..., 3.n) über den zweiten Datenbus (5) mit einem ersten Datenbusanschluss (31; 41) gebildet ist.

8. Landwirtschaftliche Maschine nach Anspruch 7, **dadurch gekennzeichnet, dass** bei den weiteren Aktoren (3.2, ..., 3.n) der Anordnung von Aktoren (3) jeweils Folgendes vorgesehen ist:
- der erste Datenbusanschluss (31; 41) des Mikrocontrollers (30; 40) ist mit einem Signaleingang (32; 42) und einem Signalausgang (33; 43) verbunden;
- der Signaleingang (42) eines folgenden Aktors (3.3) ist mit dem Signalausgang (33) eines vorangehenden Aktors (3.2) zur Datenkommunikation funktional verbunden; und
- die verbleibenden Aktoren (3.2, ..., 3.n) weisen jeweils eine Schalteinrichtung (34; 44) auf, die eingerichtet ist, die funktionale Verbindung zur Datenkommunikation zwischen dem Signaleingang (42) des folgenden weiteren Aktors (3.3) und dem Signalausgang (33) des vorangehenden weiteren Aktors (3.2) zu trennen und zu schließen.

9. Landwirtschaftliche Maschine nach Anspruch 8, **dadurch gekennzeichnet, dass** die Schalteinrichtung (34; 44) der weiteren Aktoren (3.2, ..., 3.n) jeweils eingerichtet ist, in einem Anfangszustand des weiteren Aktors (3.2, ..., 3.n), welchen der weitere Aktor (3.2, ..., 3.n) nach dem Einschalten einer Spannungsversorgung für den weiteren Aktor (3.2, ..., 3.n) einnimmt, die funktionale Verbindung zwischen dem Signalausgang (33) des vorangehenden weiteren Aktors (3.2, ..., 3.n) und dem Signaleingang (42) des folgenden weiteren Aktors (3.2, ..., 3.n) zu trennen.

10. Landwirtschaftliche Maschine nach Anspruch 8 oder 9, soweit auf Anspruch 2 rückbezogen, **dadurch gekennzeichnet, dass** die Schalteinrichtung (30; 40) der weiteren Aktoren (3.2, ..., 3.n) jeweils eingerichtet ist, die funktionale Verbindung zwischen dem Signalausgang des weiteren Aktors und dem Signaleingang des folgenden weiteren Aktors in einem Arbeitszustand des weiteren Aktors zu schließen, welchen der weitere Aktor einnimmt, wenn dem weiteren Aktor auf dem zweiten Datenbus (5) die Adresse zugeordnet ist.

11. Landwirtschaftliche Maschine nach mindestens einem der vorangehenden Ansprüche 7 bis 10, **dadurch gekennzeichnet, dass** der erste Aktor (3.1) und die weiteren Aktoren (3.2, ..., 3.n) zumindest hinsichtlich des jeweiligen Microcontrollers (30; 40) baugleich ausgeführt sind, derart, dass bei den weiteren Aktoren (3.2, ..., 3.n) der jeweilige Mikrocontroller (30; 40) einen zweiten Datenbusanschluss aufweist.

12. Landwirtschaftliche Maschine nach mindestens einem der vorangehenden Ansprüche, **dadurch gekennzeichnet, dass** die Aktoren (3.1, ..., 3.n) der Anordnung von Aktoren (3) jeweils eingerichtet sind, als Reaktion auf das Einschalten einer jeweiligen Spannungsversorgung eine Aktor-Kalibrierung auszuführen.

13. Landwirtschaftliche Maschine nach mindestens einem der vorangehenden Ansprüche, ausgeführt als eine landwirtschaftliche Verteilmaschine wie Sämaschine oder Düngerstreuer, wobei die Aktoren (3.1, ..., 3.n) der Anordnung von Aktoren (3) jeweils einer Verteileinrichtung zugeordnet sind, mit der ein auszubringendes Material dosierbar ist.

14. Verfahren zum Betreiben einer Anordnung von Aktoren (3) einer landwirtschaftlichen Maschine, mit:
- Bereitstellen einer landwirtschaftlichen Maschine mit einer Anordnung von Aktoren (3), die jeweils zwischen einem ersten und einem zweiten Betriebszustand umschaltbar sind, und einer elektronischen Steuereinheit (1), die betreibbar ist, den Aktoren (3.1, ..., 3.n) jeweils zugeordnete Steuersignale zum Umschalten zwischen dem ersten und dem zweiten Betriebszustand zu erzeugen;
- Ausbilden eines ersten Datenbusses (2), wobei
- die elektronische Steuereinheit (1) und ein erster Aktor (3.1) der Anordnung von Aktoren (3) mit dem ersten Datenbus (2) verbunden werden, derart, dass die den Aktoren (3.1, ..., 3.n) jeweils zugeordneten Steuersignale von der elektronischen Steuereinheit (1) über den ersten Datenbus (2) an den ersten Aktor (3.1) übertragen werden,
- dem ersten Aktor (3.1) eine Adresse auf dem ersten Datenbus (2) zugeordnet wird, derart, dass die den Aktoren (3.1, ..., 3.n) jeweils zugeordneten Steuersignale von der elektronischen Steuereinheit (1) zum Übermitteln an den ersten Aktor (3.1) an die Adresse auf dem ersten Datenbus (2) adressiert werden, und
- alle weiteren Aktoren (3.2, ..., 3.n) der Anordnung von Aktoren (3) frei von einer Datenkommunikationsverbindung mit dem ersten Datenbus (2) gebildet werden; und
- Ausbilden eines zweiten Datenbusses (5), wobei
- der zweite Datenbus (5) getrennt von dem ersten Datenbus (2) gebildet wird,
- der erste Aktor (3.1) sowie alle weiteren Aktoren (3.2, ..., 3.n) der Anordnung von Aktoren (3) mit dem zweiten Datenbus (5) verbunden werden, derart, dass den weiteren Aktoren (3.2, ..., 3.n) zugeordnete Steuersignale von dem ersten Aktor (3.1) an einen oder alle weiteren Aktoren (3.2, ..., 3.n) über den zweiten Datenbus (5) übertragen werden, und
- die elektronische Steuereinheit (1) frei von einer Datenkommunikationsverbindung mit dem zweiten Datenbus (5) gebildet wird.

## Geänderte Patentansprüche

### Geänderte Patentansprüche gemäss Regel 137(2) EPÜ.

1. Landwirtschaftliche Maschine, mit:
- einer Anordnung von Aktoren (3), die jeweils zwischen einem ersten und einem zweiten Betriebszustand umschaltbar sind;
- einer elektronischen Steuereinheit (1), die betreibbar ist, den Aktoren (3.1, ..., 3.n) der Anordnung von Aktoren (3) jeweils zugeordnete Steuersignale zum Umschalten zwischen dem ersten und dem zweiten Betriebszustand zu erzeugen;
- einem ersten Datenbus (2) und
- einem zweiten Datenbus (5), der getrennt von dem ersten Datenbus (2) gebildet ist; wobei
- die elektronische Steuereinheit (1) frei von einer Datenkommunikationsverbindung mit dem zweiten Datenbus (5) gebildet ist,
- ein erster Aktor (3.1) sowie alle weiteren Aktoren (3.2, ..., 3.n) der Anordnung von Aktoren (3) mit dem zweiten Datenbus (5) verbunden sind und
- alle weiteren Aktoren (3.2, ..., 3.n) der Anordnung von Aktoren (3) frei von einer Datenkommunikationsverbindung mit dem ersten Datenbus (2) gebildet sind;
**dadurch gekennzeichnet, dass**
- die elektronische Steuereinheit (1) und der erste Aktor (3.1) der Anordnung von Aktoren (3) mit dem ersten Datenbus (2) verbunden sind, derart, dass die den Aktoren (3.1, ..., 3.n) jeweils zugeordneten Steuersignale von der elektronischen Steuereinheit (1) über den ersten Datenbus (2) an den ersten Aktor (3.1) übertragbar sind,
- dem ersten Aktor (3.1) eine Adresse auf dem ersten Datenbus (2) zugeordnet ist, derart, dass die den Aktoren (3.1, ..., 3.n) jeweils zugeordneten Steuersignale von der elektronischen Steuereinheit (1) zum Übermitteln an den ersten Aktor (3.1) an die Adresse auf dem ersten Datenbus (2) adressierbar sind, und
- der erste Aktor (3.1) eingerichtet ist, den weiteren Aktoren (3.2, ..., 3.n) zugeordnete Steuersignale von dem ersten Aktor (3.1) an einen oder alle weiteren Aktoren (3.2, ..., 3.n) über den zweiten Datenbus (5) zu übertragen.

2. Landwirtschaftliche Maschine nach Anspruch 1, **dadurch gekennzeichnet, dass** den Aktoren (3.1, ..., 3.n) jeweils eine Adresse auf dem zweiten Datenbus (5) zugeordnet ist, derart, dass die den weiteren Aktoren (3.2, ..., 3.n) jeweils zugeordneten Steuersignale von dem ersten Aktor (3.1) zum Übermitteln an den jeweiligen weiteren Aktor an dessen Adresse auf dem zweiten Datenbus (5) adressierbar sind.

3. Landwirtschaftliche Maschine nach Anspruch 1 oder 2, **dadurch gekennzeichnet, dass** der erste Aktor (3.1) einen Mikrocontroller (20) aufweist, welcher zum Ausbilden einer ersten Datenkommunikationsverbindung über den ersten Datenbus (2) einen ersten Datenbusanschluss (21) und zum Ausbilden einer zweiten Datenkommunikationsverbindung über den zweiten Datenbus (5) einen zweiten Datenbusanschluss (22) aufweist, der getrennt von dem ersten Datenbusanschluss (21) gebildet ist.

4. Landwirtschaftliche Maschine nach Anspruch 3, **dadurch gekennzeichnet, dass** der erste Aktor (3.1) eine Schalteinrichtung (25) aufweist, die eingerichtet ist, den zweiten Datenbusanschluss (22) und den zweiten Datenbus (5) betriebsabhängig funktional zu trennen oder zu verbinden, derart, dass die zweite Datenkommunikationsverbindung hierdurch unterbrochen oder geschlossen ist.

5. Landwirtschaftliche Maschine nach Anspruch 4, **dadurch gekennzeichnet, dass** die Schalteinrichtung (25) eingerichtet ist, in einem Anfangszustand des ersten Aktors (3.1), welchen der erste Aktor (3.1) nach dem Einschalten einer Spannungsversorgung für den ersten Aktor (3.1) einnimmt, den zweiten Datenbusanschluss (22) und den zweiten Datenbus (5) funktional zu trennen, derart, dass die zweite Datenkommunikationsverbindung hierdurch unterbrochen ist.

6. Landwirtschaftliche Maschine nach Anspruch 4 oder 5, **dadurch gekennzeichnet, dass** die Schalteinrichtung (25) eingerichtet ist, den zweiten Datenbusanschluss (22) und den zweiten Datenbus (5) in einem Arbeitszustand des ersten Aktors (3.1) funktional zu verbinden, welchen der erste Aktor (3.1) einnimmt, wenn für die erste Datenkommunikationsverbindung auf dem ersten Datenbus (2) eine protokollbasierte Datenkommunikation zwischen der elektronischen Steuereinheit (1) und dem ersten Aktor (3.1) ausgebildet ist.

7. Landwirtschaftliche Maschine nach mindestens einem der vorangehenden Ansprüche, **dadurch gekennzeichnet, dass** die weiteren Aktoren (3.2, ..., 3.n) jeweils einen Mikrocontroller (30; 40) aufweisen, welcher zum Ausbilden einer jeweiligen Datenkommunikationsverbindung der verbleibenden Aktoren (3.2, ..., 3.n) über den zweiten Datenbus (5) mit einem ersten Datenbusanschluss (31; 41) gebildet ist.

8. Landwirtschaftliche Maschine nach Anspruch 7, **dadurch gekennzeichnet, dass** bei den weiteren Aktoren (3.2, ..., 3.n) der Anordnung von Aktoren (3) jeweils Folgendes vorgesehen ist:
- der erste Datenbusanschluss (31; 41) des Mikrocontrollers (30; 40) ist mit einem Signaleingang (32; 42) und einem Signalausgang (33; 43) verbunden;
- der Signaleingang (42) eines folgenden Aktors (3.3) ist mit dem Signalausgang (33) eines vorangehenden Aktors (3.2) zur Datenkommunikation funktional verbunden; und
- die verbleibenden Aktoren (3.2, ..., 3.n) weisen jeweils eine Schalteinrichtung (34; 44) auf, die eingerichtet ist, die funktionale Verbindung zur Datenkommunikation zwischen dem Signaleingang (42) des folgenden weiteren Aktors (3.3) und dem Signalausgang (33) des vorangehenden weiteren Aktors (3.2) zu trennen und zu schließen.

9. Landwirtschaftliche Maschine nach Anspruch 8, **dadurch gekennzeichnet, dass** die Schalteinrichtung (34; 44) der weiteren Aktoren (3.2, ..., 3.n) jeweils eingerichtet ist, in einem Anfangszustand des weiteren Aktors (3.2, ..., 3.n), welchen der weitere Aktor (3.2, ..., 3.n) nach dem Einschalten einer Spannungsversorgung für den weiteren Aktor (3.2, ..., 3.n) einnimmt, die funktionale Verbindung zwischen dem Signalausgang (33) des vorangehenden weiteren Aktors (3.2, ..., 3.n) und dem Signaleingang (42) des folgenden weiteren Aktors (3.2, ..., 3.n) zu trennen.

10. Landwirtschaftliche Maschine nach Anspruch 8 oder 9, soweit auf Anspruch 2 rückbezogen, **dadurch gekennzeichnet, dass** die Schalteinrichtung (30; 40) der weiteren Aktoren (3.2, ..., 3.n) jeweils eingerichtet ist, die funktionale Verbindung zwischen dem Signalausgang des weiteren Aktors und dem Signaleingang des folgenden weiteren Aktors in einem Arbeitszustand des weiteren Aktors zu schließen, welchen der weitere Aktor einnimmt, wenn dem weiteren Aktor auf dem zweiten Datenbus (5) die Adresse zugeordnet ist.

11. Landwirtschaftliche Maschine nach mindestens einem der vorangehenden Ansprüche 7 bis 10, **dadurch gekennzeichnet, dass** der erste Aktor (3.1) und die weiteren Aktoren (3.2, ..., 3.n) zumindest hinsichtlich des jeweiligen Microcontrollers (30; 40) baugleich ausgeführt sind, derart, dass bei den weiteren Aktoren (3.2, ..., 3.n) der jeweilige Mikrocontroller (30; 40) einen zweiten Datenbusanschluss aufweist.

12. Landwirtschaftliche Maschine nach mindestens einem der vorangehenden Ansprüche, **dadurch gekennzeichnet, dass** die Aktoren (3.1, ..., 3.n) der Anordnung von Aktoren (3) jeweils eingerichtet sind, als Reaktion auf das Einschalten einer jeweiligen Spannungsversorgung eine Aktor-Kalibrierung auszuführen.

13. Landwirtschaftliche Maschine nach mindestens einem der vorangehenden Ansprüche, ausgeführt als eine landwirtschaftliche Verteilmaschine wie Sämaschine oder Düngerstreuer, wobei die Aktoren (3.1, ..., 3.n) der Anordnung von Aktoren (3) jeweils einer Verteileinrichtung zugeordnet sind, mit der ein auszubringendes Material dosierbar ist.

14. Verfahren zum Betreiben einer Anordnung von Aktoren (3) einer landwirtschaftlichen Maschine, mit:
- Bereitstellen einer landwirtschaftlichen Maschine mit einer Anordnung von Aktoren (3), die jeweils zwischen einem ersten und einem zweiten Betriebszustand umschaltbar sind, und einer elektronischen Steuereinheit (1), die betreibbar ist, den Aktoren (3.1, ..., 3.n)jeweils zugeordnete Steuersignale zum Umschalten zwischen dem ersten und dem zweiten Betriebszustand zu erzeugen;
- Ausbilden eines ersten Datenbusses (2) und
- Ausbilden eines zweiten Datenbusses (5), wobei
- der zweite Datenbus (5) getrennt von dem ersten Datenbus (2) gebildet wird,
- der erste Aktor (3.1) sowie alle weiteren Aktoren (3.2, ..., 3.n) der Anordnung von Aktoren (3) mit dem zweiten Datenbus (5) verbunden werden und
- die elektronische Steuereinheit (1) frei von einer Datenkommunikationsverbindung mit dem zweiten Datenbus (5) gebildet wird;
dadurch**gekennzeichnet**, dass
- die elektronische Steuereinheit (1) und der erste Aktor (3.1) der Anordnung von Aktoren (3) mit dem ersten Datenbus (2) verbunden werden, derart, dass die den Aktoren (3.1, ..., 3.n) jeweils zugeordneten Steuersignale von der elektronischen Steuereinheit (1) über den ersten Datenbus (2) an den ersten Aktor (3.1) übertragen werden,
- dem ersten Aktor (3.1) eine Adresse auf dem ersten Datenbus (2) zugeordnet wird, derart, dass die den Aktoren (3.1, ..., 3.n) jeweils zugeordneten Steuersignale von der elektronischen Steuereinheit (1) zum Übermitteln an den ersten Aktor (3.1) an die Adresse auf dem ersten Datenbus (2) adressiert werden, und
- den weiteren Aktoren (3.2, ..., 3.n) zugeordnete Steuersignale von dem ersten Aktor (3.1) an einen oder alle weiteren Aktoren (3.2, ..., 3.n) über den zweiten Datenbus (5) übertragen werden.
